# NEUE EUROPÄISCHE PATENTSCHRIFT

(11) **EP 0 916 239 B2**
(45) Veröffentlichungstag und Bekanntmachung des Hinweises auf die Entscheidung über den Einspruch: **09.07.2008**
(45) Hinweis auf die Patenterteilung: 11.12.2002
(21) Anmeldenummer: 97942834.9
(22) Anmeldetag: 30.07.1997
(51) Int. Cl.: B25F 5/00, H02M 5/02

(54) **ELEKTROWERKZEUG MIT ZWANGSGEKÜHLTER STEUERELEKTRONIK**
ELECTRIC TOOL WITH DUCTED COOLED CONTROL ELECTRONICS
OUTIL ELECTRIQUE AVEC ELECTRONIQUE DE COMMANDE A REFROIDISSEMENT FORCE

(30) Priorität: 03.08.1996 DE 19631517
(43) Veröffentlichungstag der Anmeldung: 19.05.1999
(73) Patentinhaber: Wacker Construction Equipment AG, 80809 München (DE)
(72) Erfinder: STEFFEN, Michael, D-80796 München (DE)
(74) Vertreter: Hoffmann, Jörg Peter
(86) Internationale Anmeldenummer: PCT/EP1997/004130
(87) Internationale Veröffentlichungsnummer: WO 1998/006245

(56) Entgegenhaltungen:
- EP-A- 0 192 469
- EP-A- 0 206 981
- EP-A- 0 283 945
- EP-A- 0 298 278
- DE-A- 3 147 500
- DE-A- 3 247 046
- DE-A- 3 525 352
- DE-A- 3 913 971
- DE-A- 4 000 861
- DE-A- 4 211 316
- DE-U- 29 600 191
- GB-A- 2 214 722
- US-A- 4 711 308
- US-A- 4 766 963

## Beschreibung

Die Erfindung bezieht sich auf ein handgehaltenes Elektrowerkzeug.

Elektrowerkzeuge dieser Art sind bekannt.

Bei den bekannten Elektrowerkzeugen wird der drehzahlvariable Antrieb in der Regel mit einem Kollektormotor realisiert, der in seiner Antriebsspannung entweder drehzahlgeführt oder per Wertevorgabe geführt eingestellt und somit auf eine Solldrehzahl justiert wird.

Dem Kollektor des Kollektormotors wird der Strom über Kohlebürsten zugeführt, so daß sowohl der Kollektor als auch die Kohlebürsten einem in der Praxis erheblichen Verschleiß unterliegen und die Rotorwicklung wegen der unvermeidbaren beträchtlichen Erwärmung des Kollektors unter dem Stromfluß zwischen den Bürsten und dem Kollektor durch Überhitzung und Vibrationsschädigungen ausfallgefährdet ist und das wärmekritischste Bauteil in den bekannten Elektrowerkzeugen darstellt.

Es ist bekannt. daß Drehstrommotoren (Asynchron- oder Synchronmotoren), Magnetmotoren und Reluktanzmotoren gegenüber Kollektormotoren beträchtlich verschleißärmer sind und ihre thermische Belastung im Betrieb wesentlich leichter beherrschbar ist als diejenige von Kollektormotoren. Aus der EP-A-0 283 945 sowie der DE-A-32 47 046 sind jeweils handgehaltene Elektrowerkzeuge mit einem kollektorlosen Drehstrommotor bekannt, welcher vorzugsweise als Asynchronmotor ausgebildet ist und dadurch eine günstigere Drehmoment-/Drehzahl-Charakteristik bei oder unmittelbar unterhalb der maximalen Drehzahl liefert, als z. B. die Drehmoment-/Drehzahl-Charakteristik eines handgehaltenen Elektrowerkzeugs mit Kommutator-Reihenschlußmotor.

Bisher war aber der Einsatz von Drehstrommotoren bei Elektrowerkzeugen dieser Art problematisch, weil Drehstrom am Anwendungsort häufig nicht vorhanden oder zumindest nicht in der benötigten Spannung und/oder Frequenz (z.B. 250 V/200 Hz: 42 V/200 Hz) verfügbar ist.

Zur Energieversorgung sind bei derartigen Elektrowerkzeugen Transistor-Wechselrichter erforderlich die an einer gleichstromversorgung anschließbar sind, wie sie beispielsweise aus der DE-A-32 47 046 bekannt sind, die jedoch eine erhebliche Verlustenergie erzeugen, was zu einer starken Erwärmung des Umformers führt.

Die DE-A-39 13 971 offenbart eine schwingungsisolierende Handgriff-Verbindungskonstruktion für ein Maschinenwerkzeug, bei welchem das Motorgehäuse und der Handgriffteil zwei separate Bauteile darstellen, die durch eine schwingungsdämpfende Einrichtung miteinander verbunden sind. In dem Handgriffteil ist ein Reglerkasten gehalten, in dem eine elektrische Reglerschaltung zur Regelung der Drehzahl des Maschinenwerkzeugs aufgenommen ist. Über im Griffstück vorhandene Luftöffnungen kann die im Reglerkasten untergebrachte elektrische Schaltung gekühlt werden.

Der Erfindung liegt die Aufgabe zugrunde, ein Elektrowerkzeug anzugeben, das sich durch eine gegenüber den bekannten Werkzeugen geringere Verschleißanfälligkeit und thermische Belastung seines Elektromotors, sowie durch eine robuste und wartungsfreie Bauform auszeichnet und darüber hinaus so gestaltet ist, daß auch für die zur Bereitstellung der Antriebsenergie für den Elektromotor im Werkzeuggehäuse vorgesehenen Bauteile keinerlei Gefahr einer Überhitzung besteht.

Die vorstehende Aufgabe wird durch die Merkmale des Patentanspruchs 1 gelöst.

Bei dem Elektrowerkzeug gemäß der Erfindung ist infolge des erfindungsgemäßen Einbaus einer einsangsseitig mit dem Einphasenwechselstrom gespeisten und ausgangsseitig die vom Motor benötigte Stromart liefernden Steuerelektronik in Form eines Frequenzumformers in das Gehäuse des Werkzeugs praktisch jeder beliebige kollektor- und schleifringlose und damit verschleißfeste und temperatursichere Drehstrommotor als Antriebsmotor einsetzbar. Der Frequenzumformer ist erfindungsgemäß überdies in einer Weise in einem Handgriffteil des Werkzeuggehäuses eingebaut, daß auch für ihn die Gefahr einer Überhitzung sicher ausgeschlossen ist.

Die abhängigen Ansprüche 2-4 betreffen bevorzugte vorteilhafte Ausführungsformen des Werkzeugs gemäß Patentanspruch 1.

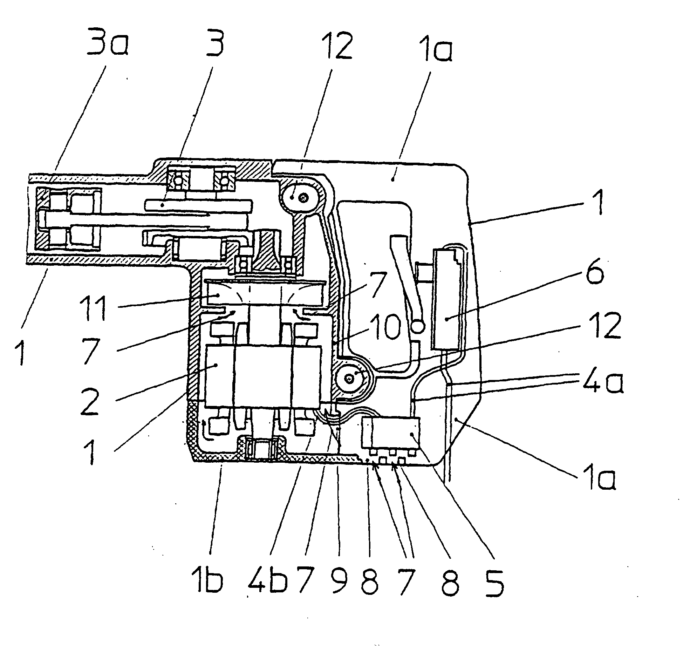

Die Erfindung wird nachstehend anhand der Zeichnung an einem Ausführungsbeispiel noch näher erläutert. Die einzige Figur der Zeichnung zeigt das Werkzeug in schematischer Darstellung im Längsschnitt.

Das in der Zeichnung dargestellte Werkzeug ist ein Schlag-Bohrhammer, der ein Gehäuse 1 aufweist, in das ein Elektromotor 2 eingebaut ist, der das mit einem Kurbeltrieb 3 versehene, im einzelnen nicht näher dargestellte Schlagwerk 3a antreibt, das von bekannter Bauart sein kann.

Der Elektromotor 2 ist ein kollektor- und schleifringloser Motor, der seine Antriebsenergie von einer emgangsseitig mit dem Einphasenwechselstrom 4a gespeisten, ausgangsseitig die motorgerechte Stromart 4b liefernden Steuerelektronik 5 erhält, wobei der Steuerelektronik 5 zum Ein- und Ausschalten des Motors 2 ein von Hand betätigbarer Schalter 6 vorgeschaltet ist.

Der Elektromotor 2 ist ein drehzahlsteuerbarer kollektor- und schleifringloser Drehstrommotor, wobei die Steuerelektronik 5 so eingerichtet und z.B. durch einen Mikroprozessor gesteuert ist, daß der jeweilige Motor die für seinen Betrieb nötige Stromart 4b von ihr erhält. In Verbindung mit der Verwendung eines Drehstrommotors als Elektromotor 2 ist liefert die eingangsseitig mit Einphasen-Wechselstrom 4a gespeiste Steuerelektronik 5 ausgangsseitig einen Drehstrom von vorzugsweise gesteuert veränderbarer und gegenüber der Netzfrequenz höherer Frequenz und ist in Form eines Frequenzumformers bekannter Bauart realisiert. Es muß sich allerdings bei dem Frequenzumformer um eine miniaturisierte Ausführung handeln, da er in dem Elektrowerkzeug unterzubringen ist, welches aus Gründen der Handhabbarkeit nur ein beschränktes Gewicht und eine beschränkte Größe einnehmen darf.

Die Steuerelektronik 5 ist so in das Gehäuse 1 des Werkzeugs eingebaut, daß sie mit einem den Motor 2 umgebenden Motorgehäuse 1b in direktem Wärmeaustausch steht, wenn das Motorgehäuse 1b aus Metall besteht, und/oder, wie in der Zeichnung dargestellt, in einem Kühlluftstrom 7 des Elektromotors 2 angeordnet ist. Zu dem letztgenannten Zweck ist die Steuerelektronik 5 in einem Handgriffteil 1a des Werkzeuggehäuses 1 so eingebaut, daß der Kühlluftstrom 7 des Motors 2 mindestens teilweise durch den Handgriff 1a hindurch über die Steuerelektronik 5 geleitet wird, wofür er durch Öffnungen 8 im Handgriffteil 1a in diesen und nach dem Überstreichen der Steuerelektronik 5 durch eine Öffnung 9 in der den Motorraum 10 abschließenden Wand vor dem Handgriffteil 1a in den Motorraum 10 einströmt und dann dort über den Motor 2 geleitet ist, um auch diesen zu kühlen. Den Kühlluftstrom bewirkt ein auf der Motorwelle 2a sitzendes Lüfterrad 11.

In der in der Figur gezeigten Ausführungsform ist die gesamte Steuerelektronik 5 im Kühlluftstrom 7 angeordnet. Alternativ dazu ist es auch möglich, lediglich eine Kühlfläche bzw. einen Teil der Kühlfläche der Steuerelektronik 5 im Kühlluftstrom 7 anzuordnen, während die eigentlichen Elektronikbautelle an einer Stelle außerhalb des Kühlluftstroms 7 angeordnet sind.

Das Gehäuse 1 wird - wie bereits beschrieben - im wesentlichen durch das Motorgehäuse 1b und den Handgriffteil 1a gebildet, die zwei separate, miteinander verbindbare Bauteile darstellen. Das Motorgehäuse 1b ist aus Metall oder Kunststoff hergestellt, während der Handgriffteil 1a aus Kunststoff besteht. Dies stellt eine thermische Entkopplung des Handgriffteils 1a von dem sich stärker erwärmenden Motorgehäuse 1b sicher.

Vorzugsweise wird die Steuerelektronik 5 schwingungsgedämpft in das Werkzeuggehäuse 1 bzw. den Handgriffteil 1a eingebaut, damit keine Vibrationen vom Schlagwerk 3a und vom nicht dargestellten Werkzeug her über das Gehäuse 1 auf sie übertragen werden, durch die sie beschädigt werden könnte.

Durch die Trennung des Gehäuses 1 in Motorgehäuse 1b und Handgriffteil 1a ist es zu diesem Zweck möglich, das Motorgehäuse 1b und den Handgriffteil 1a durch Schwingungsdämpfer 12, beispielsweise Gummipuffer zu verbinden. Bei dem in der Figur gezeigten Elektrowerkzeug sind auf jeder der beiden Außenseiten des Elektrowerkzeugs zwei, also insgesamt vier Gummielemente 12 zwischen dem Motorgehäuse 1b und dem Handgriffteil 1a angeordnet. Die Gummielemente 12 stellen eine mechanische Entkopplung dar und gewährleisten eine Schwingungsdämpfung des Handgriffteils 1a, wodurch insbesondere die im Handgriffteil 1a befindliche Steuerelektronik 5 geschont wird.

Darüber hinaus ist es auch möglich, eine Schwingungsdämpfung an dem Frequenzumrichter selbst, das heißt an der Steuerelektronik 5 vorzusehen.

## Patentansprüche

1. Von einem Elektromotor (2) angetriebenes, an Einphasenwechselstrom (4a) anschließbares, handgehaltenes Elektrowerkzeug mit einem Gehäuse (1), wobei
- der Elektromotor (2) ein kollektor- und schleifringloser Drehstrommotor ist, der seine Antriebsenergie von einer eingangsseitig mit dem Einphasenwechselstrom (4a) gespeisten und ausgangsseitig die motorgerechte Stromart (4b) liefernden Steuerelektronik in Form eines Frequenzumformers (5) erhält, der den Drehstrommotor (2) mit einem elektrischen Strom von gegenüber der Netzfrequenz höherer Frequenz antreibt;
- das Gehäuse (1) des Elektrowerkzeugs ein Motorgehäuse (1b) und einen Handgriffteil (1a) aufweist;
- der Frequenzumformer (5) in dem Handgriffteil (1a) angeordnet ist;
- mindestens ein Teil eines Kühlluftstroms (7) des Drehstrommotors (2) durch den Handgriffteil (1a) und über eine Kühlfläche des Frequenzumformers (5) führbar ist; und wobei
- das Motorgehäuse (1b) und der Handgriffteil (1a) durch Schwingungsdämpfer (12) miteinander verbunden sind.

2. Elektrowerkzeug nach Anspruch 1, **dadurch gekennzeichnet, dass** das Motorgehäuse (1b) und der Handgriffteil (1a) separate, miteinander verbindbare Bauteile sind.

3. Elektrowerkzeug nach Anspruch 2, **dadurch gekennzeichnet, dass** das Motorgehäuse (1b) aus Metall und/oder Kunststoff und der Handgriffteil (1a) aus Kunststoff herstellbar sind.

4. Elektrowerkzeug nach einem der vorhergehenden Ansprüche, **dadurch gekennzeichnet, dass** der Frequenzumformer (5) so gestaltet ist, dass er eine gesteuerte variable Einstellung der Drehzahl des Drehstrommotors (2) ermöglicht.

## Claims

1. Hand-held electric tool which is driven by an electric motor (2), can be connected to single-phase alternating current (4a) and comprises a housing (1), wherein
- the electric motor (2) is a collector- and slip ring-free three-phase motor which obtains its drive energy from control electronics in the form of a frequency converter (5) which on the input-side is powered with the single-phase alternating current (4a) and on the output-side provides the appropriate type of current (4b) for the motor, which frequency converter drives the three-phase motor (2) with an electric current of a higher frequency than the mains frequency;
- the housing (1) of the electric tool comprises a motor housing (1b) and a handle part (1a);
- the frequency converter (5) is disposed in the handle part (1a);
- at least one part of a cooling air stream (7) of the three-phase motor (2) can be guided through the handle part (1a) and across a cooling surface of the frequency converter (5), and wherein
- the motor housing (1b) and the handle part (1a) are connected together by means of a vibration damper (12).

2. Electric tool as claimed in Claim 1, **characterised in that** the motor housing (1b) and the handle part (1a) are separate components which can be connected together.

3. Electric tool as claimed in Claim 2, **characterised in that** the motor housing (1b) can be produced in metal and/or synthetic material and the handle part (1a) can be produced in synthetic material.

4. Electric tool as claimed in any one of the preceding Claims, **characterised in that** the frequency converter (5) is configured in such a manner that it enables a controlled variable adjustment of the rotational speed of the three-phase motor (2).

## Revendications

1. Outil manuel électrique entraîné par un moteur électrique (2), relié (4a) à une source de courant alternatif monophasé et comportant un boîtier (1), dans lequel
- le moteur électrique (2) est un moteur à courant triphasé sans collecteur ni bague collectrice, qui reçoit son énergie d'entraînement d'une électronique de commande alimentée côté entrée par le courant alternatif monophasé et fournissant côté sortie (4b) un courant adapté au type de moteur, formée par un convertisseur de fréquence (5) qui entraîne le moteur à courant triphasé (2) au moyen d'un courant de fréquence plus élevée que celle du réseau ;
- le boîtier (1) de l'outil électrique présente un boîtier de moteur (1b) et une poignée (1a) ;
- le convertisseur de fréquence (5) est disposé dans la poignée(1a) ; au moins une partie d'un flux d'air de refroidissement (7) du moteur à courant triphasé (2) est guidée à travers la poignée (1a) et sur une surface de refroidissement du convertisseur de fréquence (5) et dans lequel
- le boîtier du moteur (1b) et la poignée (1a) sont reliés entre eux par des amortisseurs de vibrations (12).

2. Outil électrique selon la revendication 1, **caractérisé en ce que** le boîtier du moteur (1b) et la poignée (1a) sont des composants individuels pouvant être reliés entre eux.

3. Outil électrique selon la revendication 2, **caractérisé en ce que** le boîtier du moteur (1b) peut être fabriqué en métal et/ou en matière plastique et la poignée (1a) peut être fabriquée en matière plastique.

4. Outil électrique selon l'une des revendications précédentes, **caractérisé en ce que** le convertisseur de fréquence (5) est configuré de façon à permettre un réglage commandé variable de la vitesse de rotation du moteur à courant triphasé (2).
